# FASCICULE DE BREVET EUROPEEN

(11) **EP 4 187 408 B1**
(45) Date de publication et mention de la délivrance du brevet: **02.09.2026**
(21) Numéro de dépôt: 21306650.9
(22) Date de dépôt: 29.11.2021
(51) Int. Cl.: G06F 21/30, H04L 9/32, H04L 9/40, H04W 12/06

(54) **PROCÉDÉ ET SYSTÈME D AUTHENTIFICATION D'UN UTILISATEUR SUR UN SERVEUR D'IDENTITÉ AS A SERVICE AVEC TIERS DE CONFIANCE**
VERFAHREN UND SYSTEM ZUR AUTHENTIFIZIERUNG EINES BENUTZERS AUF EINEM IDENTITÄTSSERVER ALS SERVICE MIT EINEM VERTRAUENSWÜRDIGEN DRITTEN
METHOD AND SYSTEM FOR AUTHENTICATING A USER ON AN IDENTITY AS A SERVICE SERVER WITH TRUSTED THIRD PARTIES

(43) Date de publication de la demande: 31.05.2023
(73) Titulaire: Bull SAS, 78340 Les Clayes-sous-Bois (FR)
(72) Inventeur: GUIONNEAU, Christophe, 38000 Grenoble (FR)
(74) Mandataire: IPAZ

(56) Documents cités:
- US-A1- 2018 083 977
- US-A1- 2019 333 054
- KUPERBERG MICHAEL: "Blockchain-Based Identity Management: A Survey From the Enterprise and Ecosystem Perspective", IEEE TRANSACTIONS ON ENGINEERING MANAGEMENT, IEEE, USA, vol. 67, no. 4, 1 November 2020 (2020-11-01), pages 1008 - 1027, XP011814924, ISSN: 0018-9391, [retrieved on 20201015], DOI: 10.1109/TEM.2019.2926471
- MARTI S ET AL: "Taxonomy of trust: Categorizing P2P reputation systems", COMPUTER NETWORKS, ELSEVIER, AMSTERDAM, NL, vol. 50, no. 4, 15 March 2006 (2006-03-15), pages 472 - 484, XP028042007, ISSN: 1389-1286, [retrieved on 20060315], DOI: 10.1016/J.COMNET.2005.07.011

## Description

La présente invention concerne un procédé d'authentification d'un utilisateur sur un serveur d'identité as a service, serveur IDAAS, avec tiers de confiance. Elle concerne également un système mettant en œuvre un tel procédé.

Le domaine de l'invention est le domaine de l'authentification d'un utilisateur auprès d'un serveur IDAAS, en particulier en vue d'accéder à des applications proposées en mode SaaS, également appelées applications web.

### État de la technique

Les entreprises utilisent de plus en plus d'applications "as a service" hébergées dans le cloud, appelées applications SaaS ou applications web, dans la présente demande. Ces applications SaaS nécessitent une authentification des utilisateurs. Pour diverses raisons, les entreprises ont transféré la gestion des identités et des accès vers un fournisseur d'identité as a service, IDAAS, hébergé dans le cloud, dans un serveur externe au réseau informatique de l'entreprise, et appelé serveur IDAAS (« IDentity As A Service »).

Lorsqu'un utilisateur de l'entreprise souhaite accéder à une application SaaS, il doit s'authentifier auprès du serveur IDAAS, que ce soit depuis l'intérieur ou depuis l'extérieur du réseau informatique de l'entreprise.

Certaines opérations d'authentification nécessitent d'être approuvées par une autre personne de l'entreprise, en particulier lors de l'enrôlement d'un nouvel utilisateur, lors de l'enrôlement d'un utilisateur à une nouvelle méthode d'authentification, ou encore lors de la modification de droits utilisateurs. Or, les solutions actuelles répondent à cette problématique en transférant des données sensibles relatives à l'organisations de l'entreprise vers le serveur IDAAS, ce qui d'une part est lourd et chronophage à gérer dans le temps, et d'autre part ne répond pas aux problématiques de sécurité informatiques du réseau informatique. Le document US 2019/333054 divulgue la vérification de l'identité personnelle au sein d'un système d'authentification d'identité numérique sur des réseaux de confiance. Le document XP011814924 divulgue la gestion des identités basée sur la technologie blockchain: une étude de synthèse du point de vue de l'entreprise et de l'écosystème.

Un but de la présente invention est de remédier à au moins un des inconvénients précités.

Un autre but de la présente invention est de proposer une solution d'authentification d'un utilisateur d'un réseau informatique auprès d'un serveur IDAAS, plus simple et moins chronophage à gérer dans le temps.

Il est aussi un but de la présente invention de proposer une solution d'authentification d'un utilisateur d'un réseau informatique auprès d'un serveur IDAAS plus sécurisée vis-à-vis des données dudit réseau informatique.

### Exposé de l'invention

L'invention permet d'atteindre au moins l'un des buts précités par un procédé d'authentification auprès d'un serveur d'identité as a service, dit serveur IDAAS, d'un utilisateur d'un réseau informatique, ledit procédé comprenant les étapes suivantes :
- fourniture de données d'identification dudit utilisateur dans une page Internet d'authentification dudit serveur IDAAS, et
- validation de ladite demande d'authentification par vérification des données d'identification ;
caractérisé en ce que ladite vérification est réalisée par un autre utilisateur, dit certificateur, choisi parmi les utilisateurs dudit réseau informatique connus dudit serveur IDAAS et utilisant ledit serveur IDAAS.

Ainsi, l'invention propose d'utiliser une validation d'une demande d'authentification auprès du serveur IDAAS formulée par un utilisateur d'un réseau informatique, tel qu'un réseau d'entreprise par exemple, par un autre utilisateur dudit réseau informatique utilisant ledit serveur IDAAS, et donc connu du serveur IDAAS. Ainsi, il n'est pas nécessaire de transférer vers le serveur IDAAS des données relatives à la structure du réseau informatique et qui sont sensibles pour la sécurité informatique de l'entreprise.

De plus, avec la solution proposé, l'authentification d'un utilisateur auprès du serveur IDAAS est gérée de manière plus simple et moins chronophage dans le temps car il n'est pas nécessaire de tenir à jour, dans le temps, les données relatives à la structure du réseau informatique. La solution proposée par la présente invention propose de choisir le certificateur non pas en fonction de la structure du réseau informatique mais en fonction de données d'utilisation dudit serveur IDAAS par les utilisateurs dudit réseau informatique, ces données se trouvant à disposition dudit serveur IDAAS.

Suivant des modes de réalisation l'invention, l'étape de validation peut comprendre une étape d'émission vers le certificateur d'un lien d'une page Internet comprenant au moins une partie des données d'identification à vérifier.

Ainsi, le certificateur peut afficher les données d'identification de l'utilisateur pour les vérifier et confirmer que les données sont correctes, ou détecter d'éventuelles erreurs ou fraudes.

Ce lien peut être émis vers une adresse mail ou un numéro de téléphone, ou tout autre adresse du certificateur, ou encore sous la forme d'une notification push dans une application.

La page internet peut être une page Internet de vérification du serveur IDAAS, ou une page Internet d'un autre serveur web en communication avec le serveur IDAAS, etc.

Suivant des modes de réalisation, lorsque les données d'identification de l'utilisateur sont vérifiées avec succès par le certificateur, l'étape de validation peut comprendre une étape de confirmation, par ledit certificateur, desdites données d'identification de l'utilisateur auprès du serveur IDAAS.

Le certificateur peut confirmer l'authenticité des données d'identification fournies par l'utilisateur, par exemple en sélectionnant un bouton de confirmation affiché dans une page de vérification Internet affichant lesdites données et ledit bouton de confirmation.

Suivant des modes de réalisation, lorsque le certificateur valide l'authenticité des données d'identification de l'utilisateur, l'étape de validation peut être considérée comme terminée. L'utilisateur est alors authentifiée suite à la validation du certificateur.

Suivant des modes de réalisation, lorsque les données d'identification sont confirmées par le certificateur, l'étape de validation peut comprendre les étapes suivantes :
- réception d'un code de validation émis par le serveur IDAAS,
- saisie dudit code de validation sur une page internet dudit serveur IDAAS.

Par exemple, le code de validation peut être reçu par le certificateur, pour être saisie par le certificateur ou par l'utilisateur. Dans ce dernier cas, le certificateur transmet le code à l'utilisateur.

Alternativement, ou en plus, le code de validation peut être reçu par l'utilisateur, pour être saisie par l'utilisateur ou par le certificateur. Dans ce dernier cas, l'utilisateur transmet le code au certificateur.

Par exemple, le code de validation peut être saisie par le certificateur.

Alternativement, ou en plus, le code de validation peut être communiqué par le certificateur à l'utilisateur de sorte que la saisie du code de validation est réalisée par l'utilisateur en plus à ou à la place du certificateur. Pour ce faire, à l'étape de fourniture des données d'identification et en attendant l'exécution de l'étape de validation, un code d'évènement peut être fourni à l'utilisateur lui permettant de reprendre l'authentification ultérieurement. Ainsi, lorsque l'utilisateur reçoit le code validation, du serveur IDAAS ou du certificateur, il retourne sur la page d'authentification du serveur IDAAS (ou sur une autre page du serveur IDAAS) et reprend la procédure d'authentification qu'il a initié en fournissant le code d'événement. Ensuite, il saisit le code de validation pour finaliser l'authentification.

Comme indiqué plus haut, l'invention propose de choisir le certificateur parmi les autres utilisateurs du serveur IDAAS et faisant partie du même réseau informatique que l'utilisateur.

Le choix du certificateur parmi plusieurs utilisateurs du serveur IDAAS peut être réalisé en fonction de différent paramètres, alternatifs ou cumulatifs.

Suivant des modes de réalisation, le certificateur peut être choisi par le serveur IDAAS.

Dans ce cas, le serveur IDAAS impose le certificateur à l'utilisateur. Ce mode de réalisation, présente un niveau de sécurité plus élevé car l'utilisateur n'a aucun moyen de connaitre le certificateur avant qu'il soit chois par le serveur IDAAS.

Suivant des modes de réalisation, le certificateur peut être choisi par l'utilisateur parmi plusieurs choix proposés par le serveur IDAAS.

Ce mode de réalisation permet une plus grande flexibilité pour l'utilisateur. Par exemple, l'utilisateur peut sélectionner le certificateur le plus adapté pour valider les données d'identification qu'il a fournies, à la fois en terme de connaissance de ces données, mais aussi en terme de délai de validation.

Suivant des modes de réalisation, le certificateur peut être choisi en fonction d'un type d'utilisateur des utilisateurs du réseau informatique connus du serveur IDAAS.

En particulier, l'utilisateur choisi comme étant certificateur peut être un utilisateur déclaré comme administrateur ou superadministrateur. Ce critère de choix peut notamment être utilisé lors de la mise en place de la solution proposée par la présente invention, par exemple de manière temporaire.

Dans ce cas, un groupe d'utilisateurs peuvent être déclarés comme administrateurs ou superadministrateurs. Le certificateur peut être choisi uniquement dans ce groupe d'utilisateurs.

Suivant des modes de réalisation, le certificateur peut être choisi en fonction d'un score de confiance calculé pour plusieurs, et en particulier tous les, utilisateurs du réseau informatique connus du serveur IDAAS.

Dans ce mode de réalisation, le procédé selon l'invention peut comprendre une étape de calcul et/ou une étape de mise à jour dudit score de confiance pour chaque utilisateur.

Pour au moins un utilisateur, le score de confiance dudit utilisateur peut être calculé en fonction d'une combinaison quelconque des données suivantes :
- des données d'activités dudit utilisateur. Par exemple, le score de confiance peut augmenter lorsque les données d'activités témoignent d'une activité stable ou peu variable : lorsqu'il utilise toujours le même navigateur, toujours la même méthode d'authentification, toujours le même adresse IP, les mêmes horaires, etc. Par exemple le score de confiance peut diminuer dans le cas contraire ;
- des méthodes d'authentification utilisées. Par exemple, le score de confiance peut augmenter avec le niveau des méthodes d'authentification qu'il utilise, ou lorsqu'il toujours utilise la même méthode d'authentification. Par exemple, le score de confiance peut diminuer avec le niveau des méthodes d'authentification qu'il utilise, ou lorsqu'il change souvent de méthode d'authentification ;
- des méthodes d'authentification enrôlées. Par exemple, le score de confiance peut varier proportionnellement au niveau de sécurité des méthodes d'authentification auxquelles il s'enrôle ;
- etc.

Alternativement, ou en plus, le certificateur peut être choisi en fonction d'un score de disponibilité calculé pour plusieurs, et en particulier tous les, utilisateurs du réseau informatique connus du serveur IDAAS.

Dans ce mode de réalisation, le procédé selon l'invention peut comprendre une étape de calcul et/ou une étape de mise à jour d'un score de disponibilité, correspondant par exemple à une probabilité de disponibilité de l'utilisateur.

Pour au moins un utilisateur, le score de disponibilité dudit utilisateur peut être calculé en fonction d'une combinaison quelconque des données suivantes :
- d'une fréquence d'accès aux applications web dans le passé,
- des données horaires d'accès aux applications web dans le passé,
- des dates d'accès aux applications web dans le passé,
- des durées de validation dans le passé lorsque cet utilisateur a été choisi comme certificateur,
- etc.

L'invention peut être utilisée pour réaliser une authentification dans différentes situations ou configurations.

Par exemple, l'authentification peut être une authentification pour l'enrôlement d'un nouvel utilisateur, par exemple lorsqu'un nouvel utilisateur est créé dans le réseau informatique.

L'authentification peut être une authentification d'un utilisateur connu pour l'enrôlement dudit utilisateur à une nouvelle méthode d'authentification, par exemple une méthode d'authentification moins stricte, ou une méthode d'authentification utilisant un nouvel appareil ou de nouvelles coordonnées.

L'authentification peut être une authentification d'un utilisateur connu pour une modification d'un privilège informatique dudit utilisateur, tel qu'une modification d'un droit d'accès, un accès à de nouvelles de données, une modification d'un type d'utilisateur, etc.

Suivant un autre aspect de la présente invention, il est proposé un programme d'ordinateur comprenant des instructions informatiques, qui lorsqu'elles sont exécutées par ordinateur, mettent en œuvre les étapes du procédé selon l'invention.

Le programme d'ordinateur peut être en langage machine, en C, C++, JAVA, Python, et plus généralement tout type de langage informatique.

Le programme d'ordinateur peut être un unique programme, ou un ensemble de plusieurs programmes communicants ensemble. Par exemple, le programme d'ordinateur peut comprendre une module serveur exécuté au niveau du serveur IDAAS et un module client exécuté au niveau au niveau de d'un appareil utilisé par l'utilisateur pour réaliser l'authentification. Par exemple, le module client peut comprendre un client Internet ou un navigateur Internet pour accéder à la page Internet d'authentification du serveur IDAAS. Par exemple, le module serveur peut être, ou peur comprendre, un serveur de page web comprenant un formulaire de fourniture de données d'identification.

Suivant un autre aspect de la présente invention, il est proposé un serveur d'identité as a service, également appelé serveur IDAAS, configuré pour réaliser une authentification d'un utilisateur par le procédé selon l'invention.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé d'authentification selon l'invention ;
- la FIGURE 2 est une représentation schématique d'un exemple de réalisation non limitatif d'un serveur d'authentification selon l'invention ; et
- la FIGURE 3 est une représentation schématique d'un exemple de réalisation non limitatif d'un exemple d'authentification selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

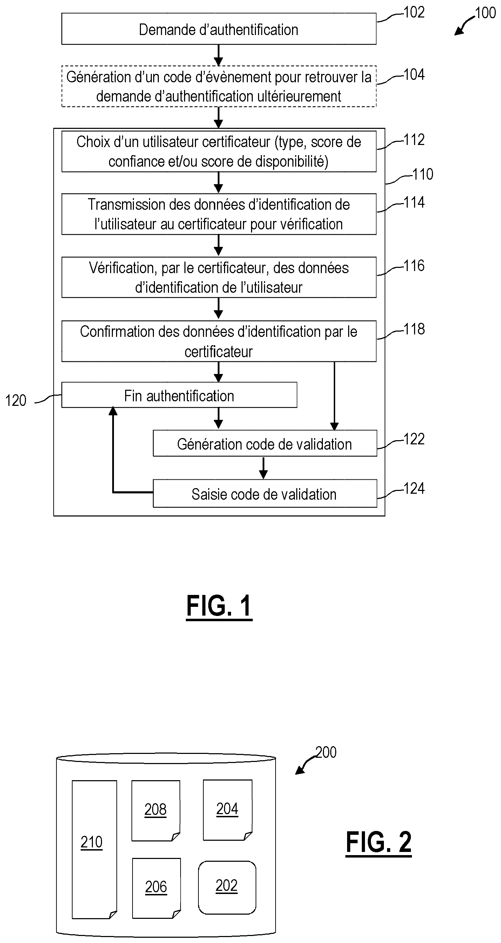

La FIGURE 1 est une représentation schématique d'un exemple de réalisation non limitatif d'un procédé d'authentification selon l'invention.

Le procédé 100, représenté sur la FIGURE 1, peut être mis en œuvre pour authentifier un utilisateur d'un réseau informatique donné, par exemple un réseau d'entreprise, en vue d'autoriser ledit utilisateur à accéder à une application SaaS, ou application web, hébergée sur un serveur d'application se trouvant en dehors du réseau informatique.

Le procédé 100 comprend une étape 102 de demande d'authentification formulée par un utilisateur du réseau informatique après du serveur IDAAS. La demande d'authentification peut être formulée depuis le réseau informatique, ou en dehors du réseau informatique.

La demande d'authentification peut être formulée, par exemple, en accédant à une page Internet d'authentification du serveur IDAAS grâce à un navigateur exécuté par un appareil de l'utilisateur, tel qu'une tablette ou un ordinateur par exemple.

La demande d'authentification est formulée en fournissant des données d'indentification demandées par le serveur IDAAS, par exemple au travers d'un formulaire affiché dans la page d'authentification web du serveur IDAAS : nom, prénom, date de naissance, lieu de résidence, etc. Après avoir entré les données d'identification, l'utilisateur confirme sa demande d'authentification, par exemple en validant les données d'identification entrée, et soumet le formulaire.

Au moment de soumettre, de manière optionnelle, le serveur IDAAS peut prendre une empreinte du navigateur en collectant toutes les données disponibles comme le type de navigateur, le système d'exploitation, la géolocalisation du navigateur, l'adresse IP, etc.

A la fin de l'étape 102, l'utilisateur peut rester connecté sur la page d'authentification IDAAS. Alternativement, lors d'une étape 104, un code d'évènement est généré par le serveur IDAAS, associé à la demande d'authentification, et permettant à l'utilisateur de retrouver sa demande d'authentification ultérieurement.

Puis, une étape 110 de validation de la demande d'authentification est réalisée.

Lors d'une étape 112, un utilisateur certificateur est choisi. Cet utilisateur certificateur fait partie du même réseau informatique que l'utilisateur qui a formulé la demande d'authentification et il est connu du serveur IDAAS.

Suivant des modes de réalisation, le certificateur peut être choisi et imposé par le serveur IDAAS. Alternativement, le certificateur peut être choisi par l'utilisateur parmi plusieurs choix proposés par le serveur IDAAS.

Le certificateur peut être choisi en fonction d'au moins un des critères suivants :
- un type d'utilisateur : utilisateur simple, administrateur, superadministrateur, déclaré auprès du serveur IDAAS. Le type d'utilisateur déclaré peut être complètement indépendant de la structure de l'entreprise de sore qu'il ne préjuge pas de, et ne donne aucune information relative à, la structure du réseau informatique de l'entreprise ;
- un score de confiance associé à chaque utilisateur ;
- un score de disponibilité associé à chaque utilisateur ;
et ce pour chacun des utilisateurs du réseau informatique connus du serveur IDAAS.

Suivant un exemple de réalisation nullement limitatif, le score de confiance peut être calculé et/ou mis à jour pour chaque utilisateur, par le serveur IDAAS, de sorte que :
- il augmente quand l'utilisateur enrôle des méthodes de niveaux élevés,
- il augmente quand l'utilisateur s'authentifie principalement avec des méthodes d'authentification forte,
- il augmente quand l'utilisateur est peu variable : toujours le même navigateur, toujours les mêmes méthodes d'authentification, toujours les mêmes adresses IP ou les mêmes caractéristiques techniques et d'horaires,
- il diminue quand l'utilisateur change de méthode d'authentification pour une plus faible,
- il diminue quand l'utilisateur change fréquemment de méthodes d'authentification (même élevées), et/ou
- il diminue quand l'utilisateur est variable : changement de navigateur, changement d'adresse IP ou de caractéristiques techniques ou d'horaires.

Suivant un exemple de réalisation nullement limitatif, le score de disponibilité peut être calculé et/ou mis à jour pour chaque utilisateur, par le serveur IDAAS, en fonction ;
- d'une fréquence d'accès aux applications web dans le passé,
- des données horaires d'accès aux applications web dans le passé,
- des dates d'accès aux application web dans le passé, et/ou
- des durées de validation dans le passé lorsque cet utilisateur é été choisi comme certificateur.

Lors d'une étape 114, un lien est émis vers l'utilisateur certificateur. Ce lien comprend une partie ou la totalité des données d'identification saisies par l'utilisateur, par exemple l'ensemble du formulaire complété par l'utilisateur lors de l'étape 102. Ce lien peut être émis dans un mail, ou un sms, ou encore sous la forme d'une notification push dans une application.

Lors d'une étape 116, l'utilisateur certificateur vérifie les données d'identification, par exemple en accédant à la page dont le lien lui a été envoyé lors de l'étape 114.

Lors d'une étape 118, le cas échéant, l'utilisateur certificateur confirme la véracité des données d'identification saisie par l'utilisateur, par exemple en appuyant sur un bouton de validation prévu à cet effet.

Suivant une première variante, l'authentification est alors confirmée et terminée lors d'une étape 120, de sorte que l'utilisateur est authentifié avec succès.

Suivant une deuxième variante, un code de validation est généré lors d'une étape 122 réalisée suite à l'étape 118. Ce code de validation peut être affiché ou envoyé au certificateur, ou directement à l'utilisateur.

Lors d'une étape 124, ce code de validation est saisi dans un champ d'une page Internet du serveur IDAAS pour terminer l'authentification. Soit le code est saisi par le certificateur, soit il est saisi par l'utilisateur. Si à l'étape 122 le code de validation est reçu par le certificateur, ce dernier le communique par un moyen sécurisé à l'utilisateur qui le saisit dans la page Internet du serveur IDAAS, éventuellement après avoir retrouvé sa demande d'authentification à l'aide du code d'évènement généré à l'étape 104.

L'authentification est alors terminée et l'utilisateur est authentifié avec succès.

La FIGURE 2 est une représentation schématique d'un exemple de réalisation non limitatif d'un serveur IDAAS selon l'invention.

Le serveur IDAAS 200, représenté sur la FIGURE 2, peut être utilisé pour mettre en œuvre un procédé selon l'invention, et en particulier le procédé 100 de la FIGURE 1.

Le serveur IDAAS 200 comprend un module d'authentification 202 prévu pour :
- présenter une page d'authentification à un navigateur exécuté par un appareil utilisateur,
- recevoir des données d'identification entrées par l'utilisateur, par exemple sous la forme d'un formulaire complété, et éventuellement des données concernant l'appareil utilisateur en prenant une empreinte du navigateur utilisé pour fournir les données d'identification,
- soumettre des données d'identification saisie par l'utilisateur à un utilisateur certificateur pour validation, et
- recevoir une validation de la part de l'utilisateur certificateur, le cas échéant.
Par exemple, le module d'authentification 202 peut être configuré pour réaliser une combinaison quelconque des étapes du procédé 100 de la FIGURE 1 réalisées par le serveur IDAAS.

Le serveur 200 comprend en outre un module 204 de calcul et de mise jour d'un score de confiance pour chaque utilisateur, par exemple en fonction de données listées plus haut.

Le serveur 200 comprend en outre un module 206 de calcul et de mise jour d'un score de disponibilité pour chaque utilisateur, par exemple en fonction de données listées plus haut.

Le serveur 200 comprend en outre un module 208 de sélection d'un utilisateur certificateur, ou de plusieurs utilisateurs certificateurs à proposer à l'utilisateur en fonction :
- d'un type d'utilisateur,
- d'un score de confiance, et/ou
- d'un score de disponibilité.

Le serveur 200 comprend en outre une liste 210 d'utilisateurs pouvant chacun être sélectionné comme certificateur et appartenant au même réseau informatique que l'utilisateur demandant l'authentification.

Au moins un des modules 202-208 peut être un module logiciel ou un programme informatique.

Au moins deux des modules 202-208 peuvent être indépendants.

Au moins deux des modules 202-208 peuvent être intégrés dans un même module.

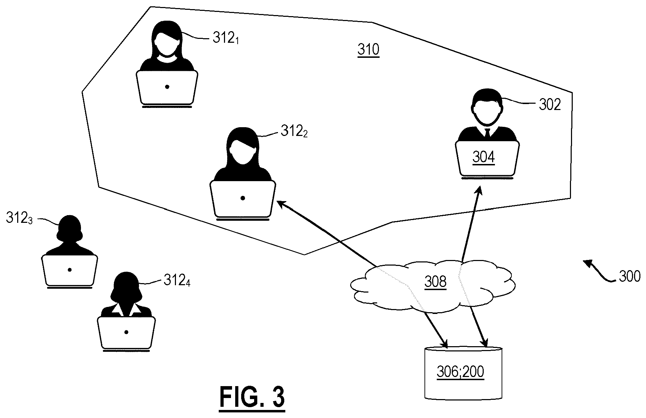

La FIGURE 3 est une représentation schématique d'un exemple de configuration d'authentification pouvant être réalisé par la présente invention.

Dans la configuration 300 représentée sur la FIGURE 3, un utilisateur 302 avec son appareil utilisateur 304 peut demander à s'authentifier auprès d'un serveur IDAAS 306, qui peut être le serveur 200 de la FIGURE 2, au travers d'un réseau de communication 308 tel que le réseau Internet.

L'utilisateur 302 appartient à un réseau informatique 310, tel que par exemple un réseau d'entreprise. Dans la configuration 300 représentée, l'utilisateur 302 se trouve dans la réseau d'entreprise 310 au moment de la demande d'authentification. Bien entendu, dans d'autres configurations, l'utilisateur 302 demandant l'authentification peut se trouver hors du réseau informatique 310.

Le réseau informatique 310 comprend aussi d'autres utilisateurs 312 connus par le serveur IDAAS 306 et utilisant le serveur IDAAS 306. Dans l'exemple de la FIGURE 3, sans perte de généralité, uniquement quatre autres utilisateurs 312₁-312₄ sont représentés. Dans l'exemple représenté, au moment de la demande d'authentification, les utilisateurs 312₁ et 312₂ se trouvent dans le réseau informatique 310 et les utilisateurs 312₃ et 312₄ se trouvent hors du réseau informatique 310.

L'un quelconque des utilisateurs 312₁-312₄ peut être choisi comme utilisateur certificateur, soit par le serveur IDAAS soit par l'utilisateur 302 sur proposition du serveur IDAAS 306. Dans l'exemple de la FIGURE 3, le certificateur choisi est l'utilisateur 312₂.

Le certificateur 312₂ vérifie et, le cas échéant, valide les données d'indentification saisies par l'utilisateur 302 et qui lui sont transmises par le serveur IDAAS 306.

Ainsi, l'authentification de l'utilisateur 302 est réalisée avec le concours d'un autre utilisateur du réseau informatique auquel appartient ledit utilisateur 302 et qui est connu du serveur IDAAS 306.

Bien entendu, ces exemples sont donnés à titre d'exemples particuliers uniquement et l'invention n'est pas limitée aux exemples détaillés ci-dessus. De nombreuses variantes peuvent être imaginées aux exemples donnés ci-dessus sans sortir du cadre de l'invention telle que définie dans les revendications principales.

## Revendications

1. Procédé (100) d'authentification auprès d'un serveur d'identité as a service (200;306), dit serveur IDAAS, d'un utilisateur (302) d'un réseau informatique (310), ledit procédé (100) comprenant les étapes suivantes :
- fourniture (102) de données d'identification dudit utilisateur (302) dans une page Internet d'authentification dudit serveur IDAAS (200;306), et
- validation (110) de ladite demande d'authentification par vérification (116) des données d'identification ;
**caractérisé en ce que** ladite vérification (116) est réalisée par un autre utilisateur (312₂), dit certificateur, choisi parmi les utilisateurs (312₁-312₄) dudit réseau informatique (310) connus dudit serveur IDAAS (200;306) et utilisant ledit serveur IDAAS (200;306).

2. Procédé (100) selon la revendication précédente, **caractérisé en ce que** l'étape de validation (110) comprend une étape (114) d'émission vers le certificateur (312₂) d'un lien d'une page Internet comprenant au moins une partie des données d'identification à vérifier.

3. Procédé (100) selon l'une quelconque des revendications précédentes, **caractérisé en ce que**, lorsque les données d'identification de l'utilisateur (302) sont vérifiées avec succès par le certificateur, l'étape de validation (110) comprend une étape (118) de confirmation, par ledit certificateur, desdites données d'identification de l'utilisateur auprès du serveur IDAAS.

4. Procédé (100) selon la revendication précédente, **caractérisé en ce que**, lorsque les données d'identification sont confirmées par le certificateur, l'étape de validation (110) comprend les étapes suivantes :
- réception (122) d'un code de validation émis par le serveur IDAAS,
- saisie (124) dudit code de validation sur une page internet dudit serveur IDAAS.

5. Procédé (100) selon l'une quelconque des revendications précédentes, **caractérisé en ce que** le certificateur (312₂) est choisi par le serveur IDAAS (306;200).

6. Procédé (100) selon l'une quelconque des revendications précédentes, **caractérisé en ce que** le certificateur (312₂) est choisi par l'utilisateur (302) parmi plusieurs choix proposés par le serveur IDAAS (306;200).

7. Procédé (100) selon l'une quelconque des revendications précédentes, **caractérisé en ce que** le certificateur (312₂) est choisi en fonction d'un type d'utilisateur des utilisateurs (312₁-312₄) du réseau informatique (310) connus du serveur IDAAS (306;200), et en particulier parmi des utilisateurs de type superadministrateur.

8. Procédé (100) selon l'une quelconque des revendications précédentes, **caractérisé en ce que** le certificateur (312₂) est choisi en fonction d'un score de confiance calculé pour plusieurs, et en particulier tous les, utilisateurs (312₁-312₄) du réseau informatique (310) connus du serveur IDAAS (306;200).

9. Procédé (100) selon l'une quelconque des revendications précédentes, **caractérisé en ce que** le certificateur (312₂) est choisi en fonction d'un score de disponibilité calculé pour plusieurs, et en particulier tous les, utilisateurs (312₁-312₄) du réseau informatique (310) connus du serveur IDAAS (200;306).

10. Procédé (100) selon l'une quelconque des revendications précédentes, **caractérisé en ce que** l'authentification consiste en une :
- authentification pour l'enrôlement d'un nouvel utilisateur (302) ;
- authentification d'un utilisateur connu (302) pour l'enrôlement dudit utilisateur à une nouvelle méthode d'authentification ;
- authentification d'un utilisateur connu (302) pour une modification d'un privilège informatique dudit utilisateur (302), tel qu'une modification d'un droit d'accès.

11. Programme d'ordinateur comprenant des instructions informatiques, qui lorsqu'elles sont exécutées par ordinateur, mettent en œuvre les étapes du procédé (100) selon l'une quelconque des revendications précédentes.

12. Serveur d'identité as a service (306;200), serveur IDAAS, configuré pour réaliser une authentification d'un utilisateur par le procédé (100) selon l'une quelconque des revendications 1 à 10.

## Patentansprüche

1. Verfahren (100) zur Authentifizierung eines Benutzers (302) eines Rechnernetzes (310) bei einem Identity-as-a-Service-Server (200; 306), IDAAS-Server genannt, das Verfahren (100) umfassend die folgenden Schritte:
- Bereitstellen (102) von Identifikationsdaten des Benutzers (302) auf einer Authentifizierungsinternetseite des IDAAS-Servers (200; 306), und
- Validieren (110) der Authentifizierungsanforderung durch Überprüfen (116) der Identifikationsdaten;
**dadurch gekennzeichnet, dass** das Überprüfen (116) durch einen anderen Benutzer (312₂), Zertifizierer genannt, durchgeführt wird, der aus den Benutzern (312₁-312₄) des Rechnernetzes (310) ausgewählt ist, die dem IDAAS-Server (200; 306) bekannt sind und den IDAAS-Server (200; 306) verwenden.

2. Verfahren (100) nach dem vorstehenden Anspruch, **dadurch gekennzeichnet, dass** der Schritt des Validierens (110) einen Schritt (114) eines Sendens eines Links einer Internetseite, umfassend mindestens einen Teil der zu überprüfenden Identifikationsdaten, an den Zertifizierer (312₂) umfasst.

3. Verfahren (100) nach einem der vorstehenden Ansprüche, **dadurch gekennzeichnet, dass**, wenn die Identifikationsdaten des Benutzers (302) durch den Zertifizierer erfolgreich verifiziert werden, der Schritt des Validierens (110) einen Schritt (118) eines Bestätigens der Identifikationsdaten des Benutzers bei dem IDAAS-Server durch den Zertifizierer umfasst.

4. Verfahren (100) nach dem vorstehenden Anspruch, **dadurch gekennzeichnet, dass**, wenn die Identifikationsdaten durch den Zertifizierer bestätigt werden, der Schritt des Validierens (110) die folgenden Schritte umfasst:
- Empfangen (122) eines Validierungscodes, der durch den IDAAS-Server gesendet wird,
- Eingeben (124) des Validierungscodes auf einer Internetseite des IDAAS-Servers.

5. Verfahren (100) nach einem der vorstehenden Ansprüche, **dadurch gekennzeichnet, dass** der Zertifizierer (312₂) durch den IDAAS-Server (306; 200) ausgewählt wird.

6. Verfahren (100) nach einem der vorstehenden Ansprüche, **dadurch gekennzeichnet, dass** der Zertifizierer (312₂) durch den Benutzer (302) aus mehreren Auswahlmöglichkeiten ausgewählt wird, die durch den IDAAS-Server (306; 200) vorgeschlagen werden.

7. Verfahren (100) nach einem der vorstehenden Ansprüche, **dadurch gekennzeichnet, dass** der Zertifizierer (312₂) in Abhängigkeit von einer Benutzerart der Benutzer (312₁-312₄) des Rechnernetzes (310) ausgewählt wird, die dem IDAAS-Server (306; 200) bekannt sind, und insbesondere aus Benutzern von der Art Superadministrator.

8. Verfahren (100) nach einem der vorstehenden Ansprüche, **dadurch gekennzeichnet, dass** der Zertifizierer (312₂) in Abhängigkeit von einem Vertrauenswert ausgewählt wird, der für mehrere, und insbesondere alle, Benutzer (312₁- 312₄) des Rechnernetzes (310) berechnet wird, die dem IDAAS-Server (306; 200) bekannt sind.

9. Verfahren (100) nach einem der vorstehenden Ansprüche, **dadurch gekennzeichnet, dass** der Zertifizierer (312₂) in Abhängigkeit von einem Verfügbarkeitswert ausgewählt wird, der für mehrere, und insbesondere alle, Benutzer (312₁-312₄) des Rechnernetzes (310) berechnet wird, die dem IDAAS-Server (200; 306) bekannt sind.

10. Verfahren (100) nach einem der vorstehenden Ansprüche, **dadurch gekennzeichnet, dass** die Authentifizierung besteht aus:
- Authentifizieren für die Registrierung eines neuen Benutzers (302);
- Authentifizieren eines bekannten Benutzers (302) für die Registrierung des Benutzers für eine neue Authentifizierungsmethode;
- Authentifizieren eines bekannten Benutzers (302) für eine Änderung eines Rechnerprivilegs des Benutzers (302), wie etwa eine Änderung eines Zugriffsrechts.

11. Computerprogramm, umfassend Computeranweisungen, die, wenn sie durch einen Computer ausgeführt werden, die Schritte des Verfahrens (100) nach einem der vorstehenden Ansprüche implementieren.

12. Identity-as-a-Service-Server (306; 200), IDAAS-Server, der zum Durchführen einer Authentifizierung eines Benutzers durch das Verfahren (100) nach einem der Ansprüche 1 bis 10 konfiguriert ist.

## Claims

1. A method (100) of authenticating with an identity-as-a-service server (200;306), called IDAAS server, a user (302) of a computer network (310), said method (100) comprising the following steps:
- providing (102) identification data for said user (302) in an authentication web page of said IDAAS server (200;306), and
- validating (110) said authentication request by verifying (116) the identification data;
**characterized in that** said verification (116) is performed by another user (312₂), called certifier, selected from users (312₁-312₄) of said computer network (310) known to said IDAAS server (200;306) and using said IDAAS server (200;306).

2. The method (100) according to the preceding claim, **characterized in that** the validation step (110) comprises a step (114) of transmitting to the certifier (312₂) a link to a web page comprising at least some of the identification data to be verified.

3. The method (100) according to any one of the preceding claims, **characterized in that**, when the identification data of the user (302) are successfully verified by the certifier, the validation step (110) comprises a step (118) of confirming, by said certifier, said identification data for the user with the IDAAS server.

4. The method (100) according to the preceding claim, **characterized in that**, when the identification data are confirmed by the certifier, the validation step (110) comprises the following steps:
- receipt (122) of a validation code sent by the IDAAS server,
- entry (124) of said validation code into a web page of said IDAAS server.

5. The method (100) according to any one of the preceding claims, **characterized in that** the certifier (312₂) is selected by the IDAAS server (306;200).

6. The method (100) according to any one of the preceding claims, **characterized in that** the certifier (312₂) is selected by the user (302) from several options proposed by the IDAAS server (306;200).

7. The method (100) according to any one of the preceding claims, **characterized in that** the certifier (312₂) is selected based on a user type from the users (312₁-312₄) of the computer network (310) known to the IDAAS server (306;200), and in particular from superadministrator type users.

8. The method (100) according to any one of the preceding claims, **characterized in that** the certifier (312₂) is selected based on a confidence score calculated for several, and in particular for all, users (312₁-312₄) of the computer network (310) known to the IDAAS server (306;200).

9. The method (100) according to any one of the preceding claims, **characterized in that** the certifier (312₂) is selected based on an availability score calculated for several, and in particular for all, users (312₁-312₄) of the computer network (310) known to the IDAAS server (200;306).

10. The method (100) according to any of the preceding claims, **characterized in that** the authentication consists in an:
- authentication in order to register a new user (302);
- authentication of a known user (302) in order to register said user to a new authentication method;
- authentication of a known user (302) in order to modify a computer privilege for said user (302), such as to modify an access right.

11. A computer program comprising computer instructions, which when executed by computer, implement the steps of the method (100) according to any one of the preceding claims.

12. An identity-as-a-service server (306;200), an IDAAS server, configured to authenticate a user by the method (100) according to any one of claims 1 to 10.
